(19) Europäisches Patentamt
European Patent Office
Office européen des brevets

(11) Publication number: **0 141 393**
**B1**

(12) **EUROPEAN PATENT SPECIFICATION**

(45) Date of publication of patent specification: **17.08.88**

(51) Int. Cl.$^4$: **C 07 F 9/65**, G 01 N 33/94

(21) Application number: **84112997.6**

(22) Date of filing: **29.10.84**

# (54) Phenobarbital and carbamazepine enzyme inhibitors.

(30) Priority: **04.11.83 US 548742**
**04.11.83 US 548743**

(43) Date of publication of application:
**15.05.85 Bulletin 85/20**

(45) Publication of the grant of the patent:
**17.08.88 Bulletin 88/33**

(84) Designated Contracting States:
**AT BE CH DE FR GB IT LI LU NL SE**

(56) References cited:
**US-A-4 273 866**

(73) Proprietor: **ABBOTT LABORATORIES**
**14th Street and Sheridan Road North St**
**North Chicago Illinois 60064 (US)**

(72) Inventor: **Flentge, Charles Arthur**
**25296 West Wayside Place**
**Lake Villa Illinois 60046 (US)**
Inventor: **Herrin, Thomas Raymond**
**1336 Hickory Street**
**Waukegan Illinois 60085 (US)**

(74) Representative: **Modiano, Guido et al**
**MODIANO, JOSIF, PISANTY & STAUB**
**Modiano & Associati Via Meravigli, 16**
**I-20123 Milan (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 141 393 B1**

**Description**

This invention relates to phenobarbital and carbamazepine conjugates, and more particularly to phenobarbital-thiophosphonate and carbamazepine-thiophosphonate conjugates for use as enzyme tracers.

There is described in US—A—4,273,866 a technique for determining the presence of ligands in test samples in which a test sample is mixed with a ligand analog-irreversible enzyme inhibitor conjugate as well as a binding protein bindable to the ligand and the ligand analog-irreversible inhibitor conjugate. As described in that patent, the amount of ligand analog-irreversible enzyme inhibitor conjugate bound by the binding protein is related to the amount of ligand test sample. Thus, the techniques as described in that patent provide a convenient immunoassay technique for measuring the amount of a variety of drugs, hormones and like biological fluids.

The present invention relates to novel conjugates of phenobarbital and carbamazepine which can be used in the immunoassay technique described in the foregoing patent.

The concepts of the present invention reside in compounds having the formula:

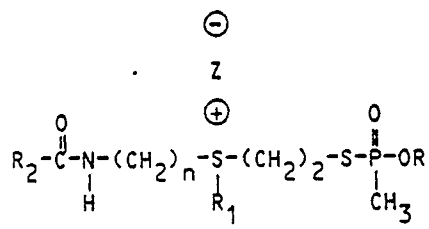

wherein $R_2$ is selected from the group consisting of:

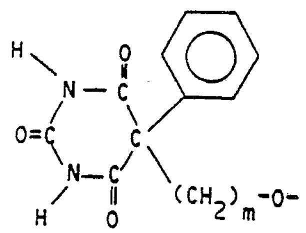

and

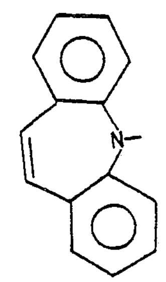

and wherein Z is a biologically compatible counter ion, n and m are each independently an integer from 2 to 6, and R and $R_1$ are each independently alkyl with 1 to 5 carbon atoms (*e.g.* methyl, ethyl, propyl, n-butyl, tert-butyl, etc.).

As used herein, the term "biologically compatible counter ion" refers to anions represented by "Z" including, for example, chloro, iodo, methylsulfate, tetrafluoroborate and the like.

The compounds of the present invention are useful as tracers for acetylcholinesterase in immunoassays for the determination of phenobarbital and carbamazepine in serum or plasma. Such compounds can be used, for example, in the immunoassay technique described in US—A—4,273,866, the disclosure of which is incorporated herein by reference.

The compounds of the present invention are prepared using standard synthetic techniques. For example, a compound useful as a tracer for acetylcholinesterase in immunoassays for determination of phenobarbital is prepared as follows.

A 5-hydroxy phenobarbital analog is first reacted with phosgene to form the corresponding chloroformate derivative as illustrated by the following:

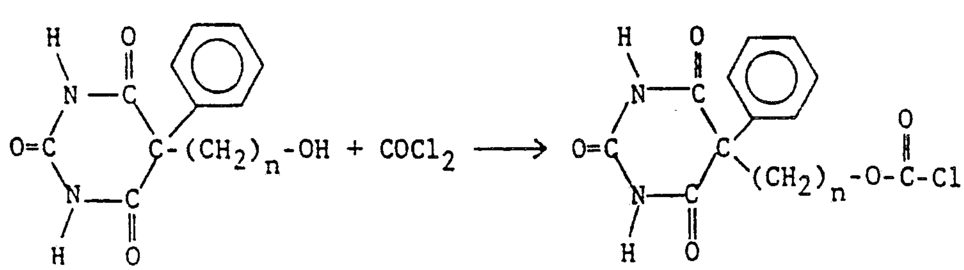

(II)

In a separate step, an n-butoxycarbonyl protected phosphonate is, in accordance with the teachings of U.S. Patent No. 4,273,866, converted to the corresponding trifluoroacetic salt as illustrated below:

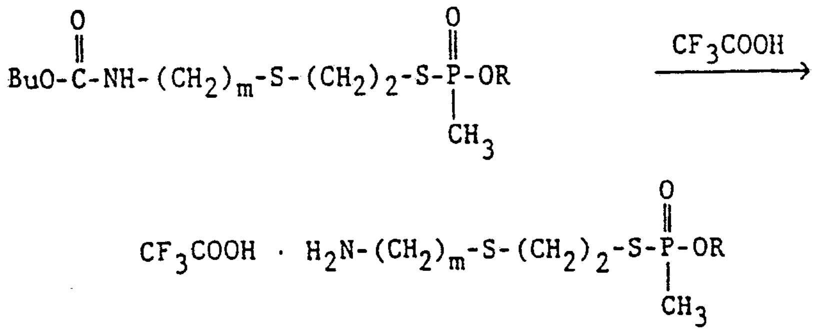


(III)

The amide derivative of phenobarbital is then prepared by reacting the trifluoroacetic salt of the phosphonate with the chloroformate derivative of phenobarbital to produce the following compound:

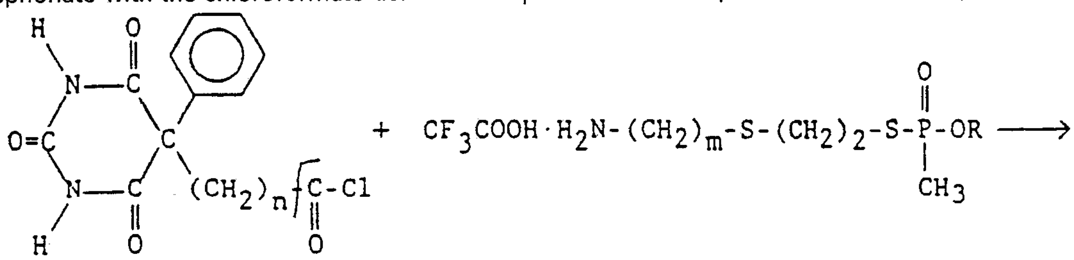

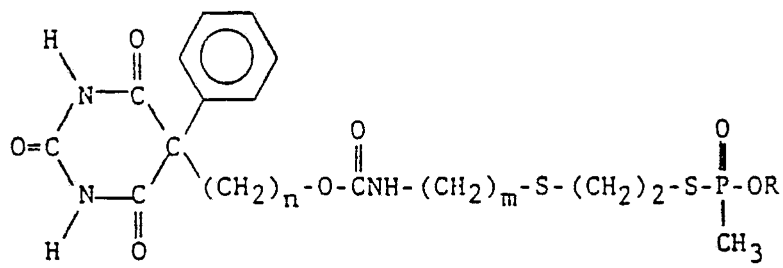

(IV)

In another example, a compound useful as a tracer for acetylcholinesterase in immunoassays for determination of carbamazepine is prepared as follows:

Iminostilbene is first reacted with phosgene to form the corresponding chloroformamide derivative as illustrated by the following:

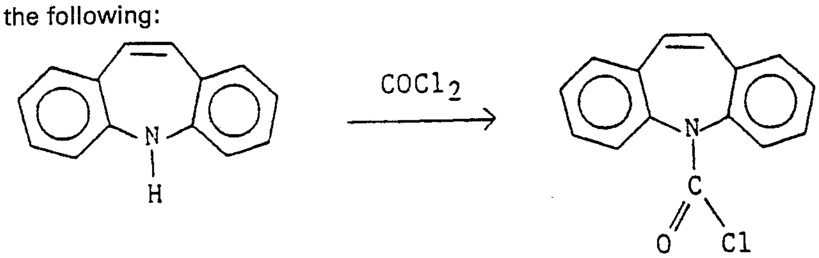


(IIA)

In a separate step, an n-butoxycarbonyl protected phosphonate is, in accordance with the teachings of U.S. Patent No. 4,273,886, converted to the corresponding trifluoroacetic salt as illustrated below:

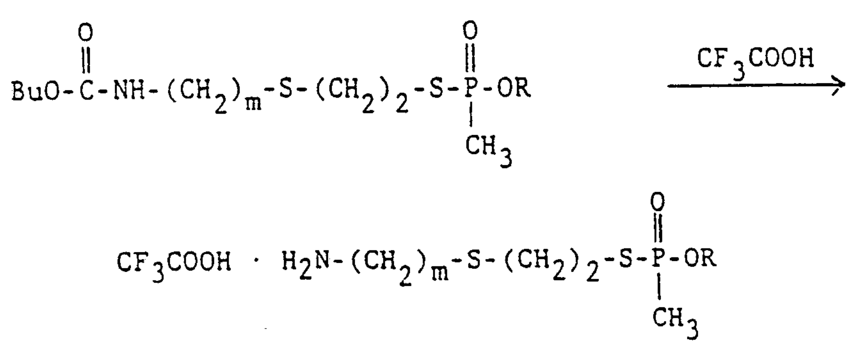


(IIIA)

The products (IIA) and (IIIA) are then reacted in the presence of an amine base:

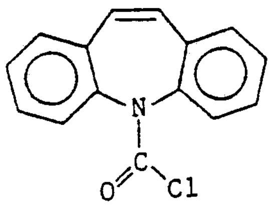

+

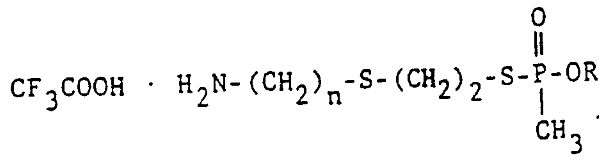

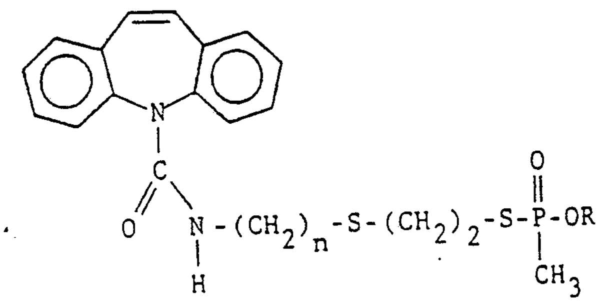

(IVA)

Finally, in the last step, compound IVA is reacted with an alkyl iodide and preferably methyl iodide in the presence of a Lewis acid catalyst such as silver tetrafluoroborate to produce the compounds of the invention.

As indicated above, the compounds of the present invention can be used in the imunoassay for phenobarbital or carbamazepine in accordance with the techniques described in US—A—4,273,866. Generally, in the use of the compounds of the invention, the phenobarbital or carbamazepine in a serum specimen is mixed with a specific antibody against phenobarbital or carbamazepine, the enzyme acetylcholinesterase, the phenobarbital or carbamazepine analogs of the present invention, the enzyme substrate which is typically acetyl-beta-(methylthio)cholline iodide and a reagent to produce the chromogenic product, usually 5,5′-dithiobis-(2-nitrobenzoic) acid. As those skilled in the art of appreciate, the phenobarbital or carbamazepine present in the specimen and the phenobarbital or carbamazepine analog compete for a limited number of binder sites on the antibody, the degree of binding of each being proportional to their respective concentrations. The phenobarbital or carbamazepine analogs of the present invention, which are unbound rapidly and irreversibly, inhibit the enzyme while the analog bound by the antibody has no inhibitory effect on the enzyme. Thus, the amount of enzyme activity which is inhibited is related to the concentration of the phenobarbital or carbamazepine in the specimen.

As is described in the foregoing patent, such enzyme activity can be measured colorimetrically. The active enzyme activates the substrate which further reacts to produce a chromogenic product. Spectrophotometric absorbence readings can thus be made, indicating the amount of phenobarbital or carbamazepine present in the specimen.

The immunoassay can be performed at ambient temperatures although, as will be appreciated by those skilled in the art, temperatures ranging from ambient to physiological temperatures can be used with facility. Reaction times are dependent on temperature and reagent dilution.

Having described the basic concepts of the present invention, reference is now made to the following examples which are provided by way of illustration of the practice of the invention of the preparation of the phenobarbital or carbamazepine conjugates.

Example 1

This example illustrates the preparation of a phenobarbital conjugate.

5-hydroxyethyl-5-phenobarbituric acid (4.0 g) is added to freshly distilled tetrahydrofuran. Phosgene gas is passed through the solution for 10 minutes until all the material has solubilized. Nitrogen gas is passed through the solution for one hour and solvent is removed by evacuation. The residue is dried under vacuum to give 4.6 g (92%) as a white solid (II).

The butoxycarbonyl thiophosphonate (V, 1.4 g)

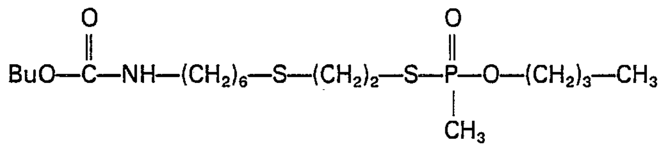

(V)

is taken up in methylene chloride (4 ml) and cooled to 0°C. Trifluoroacetic acid (4 ml) is added and the reaction is stirred for 30 minutes at 0°C. Solvent is removed to give a quantitive yield (1.4 g) of (VI) as an oil.

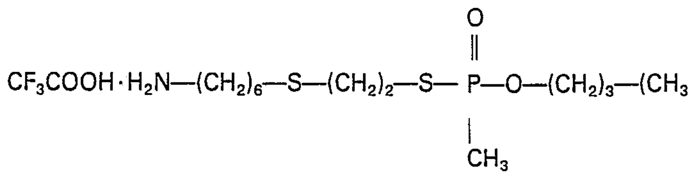

(VI)

Compound (VII, 2.1 g) is taken up in methylene chloride and triethylamine is added to pH 9. The chloroformate (II, 1.5 g) is added and the reaction is stirred for 2 hours. The reaction mixture is washed with brine, water and dried over magnesium sulfate. Solvent is removed to yield 1.3 g of (VII) as an oil.

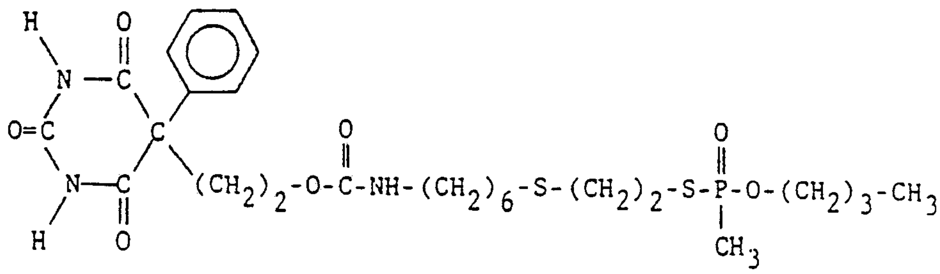

(VII)

Compound (VII, 1.1 g) is taken up in methylene choride (4 ml) and methyl iodide (4 ml) is added. Silver tetrafluoroborate (0.5 g) is added and the reaction is stirred at room temperature for 30-45 minutes. Silver iodide is removed by filtration and solvent removed to give crude (VIII). Purification is performed on a Waters Prep 500A unit eluting with 75/25/.01*M* methanol-water-trifluoroacetic acid to give 0.61 g oc (VIII).

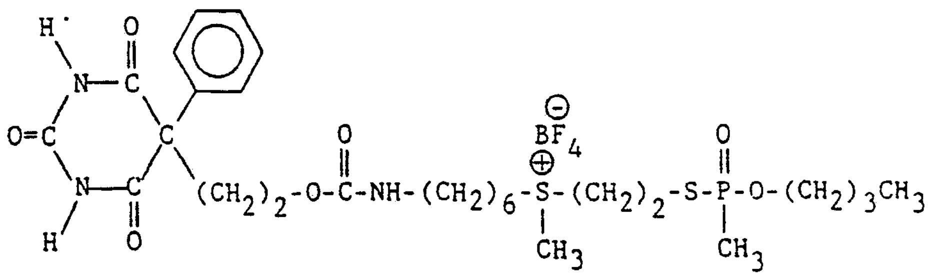

(VIII)

The compound was determined to have a second order rate constant for the inhibition of acetylcholinesterase of $3.5 \times 10^8$ liter $mole^{-1}$ $min^{-1}$.

Example 2

This example illustrates the preparation of a carbamazepine conjugate.

Iminostilbene (10 g) is added to toluene and stirred in suspension. Phosgene gas is passed through the solution until all the iminostilbene is dissolved. The solution is refluxed while phosgene is continued for 15 minutes. Phosgene is discontinued and nitrogen is passed through the solution for one hour during cooling. The solid which forms is collected on a filter and dried to yield 5.7 g of the corresponding N-chloroformamide derivative (IIA).

The butoxycarbonyl thiophosphonate (VA, 4.0 g)

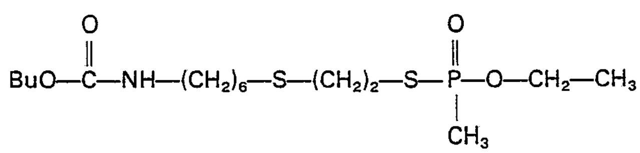

(VA)

is taken up in methylene chloride (10 ml) and cooled to 0°C. Trifluoroacetic acid (10 ml) is added and the solution is stirred for 30 minutes at 0°C. Solvent is removed to give a quantitative yield of (VIA) as an oil

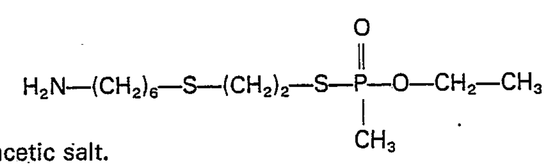

(VIA)

in the form of its trifluoroacetic salt.

The chloroformamide (IIA, 2.55 g) is dissolved in methylene chloride and added to the thiophosphonate (VIA, 2.02 g) in methylene chloride. The reaction is stirred at room temperature for six hours while keeping the pH at 9 using triethylamine. The solution is washed with water, dried with magnesium sulfate and solvent removed. The residue is chromatographed on silica gel eluting with ethyl acetate to give 2.7 g of (VIIA).

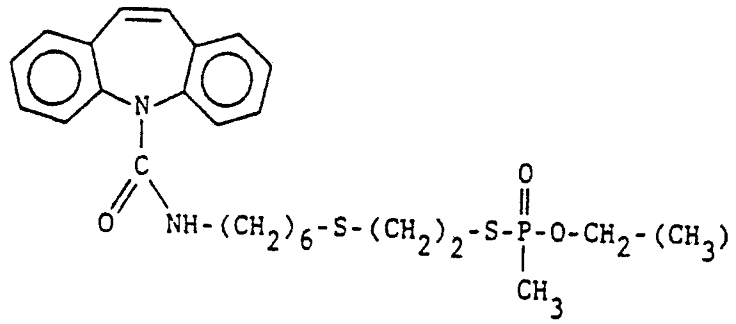

(VIIA)

Compound (VIIA, 2.5 g) is taken up in methylene chloride (5 ml) and cooled to 0°C. Methyl iodide (5 ml) is added followed by silver tetrafluoroborate (1.22 g). The solution is warmed to room temperature, while stirring, for 30 minutes. Silver iodide is filtered off and solvent is removed. The residue is purified on a Waters Prep 500A unit eluting with 80/20/.01 *M* methanol-water-trifluoroacetic acid on two reversed phase columns to yield 1.56 g of (VIIIA).

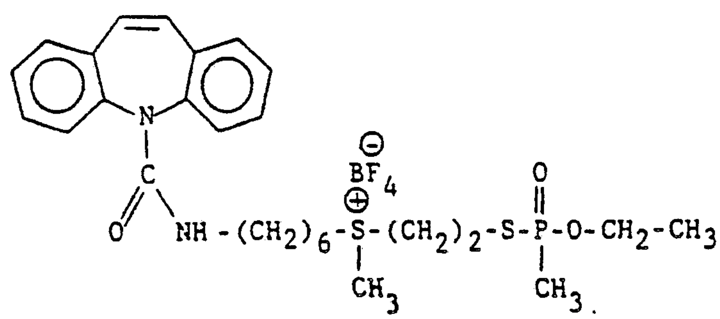

(VIIIA)

The compound was determined to have a second order rate constant for the inhibition of acetylcholinesterase of $1.8 \times 10^8$ liter $mole^{-1}$ $min^{-1}$.

As will be understood by those skilled in the art, the biologically compatible counter ion is derived from the Lewis acid employed in the last step of the reaction. Other Lewis acids well known to those skilled in the art may be used in lieu of silver tetrafluoroborate, including metal salts containing, as the anion, chloro, iodo and methyl sulfate groups to produce compounds having the corresponding biologically compatible counter ion.

**Claims**

1. A compound having the formula:

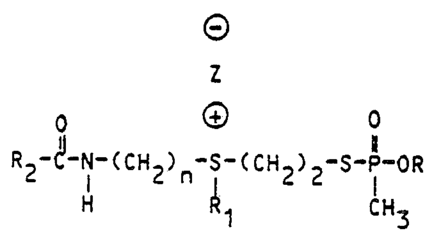

wherein Z is a biologically compatible counter ion, n is an integer from 2 to 6, R and $R_1$ are each independently alkyl with 1 to 5 carbon atoms and $R_2$ is selected from the group consisting of

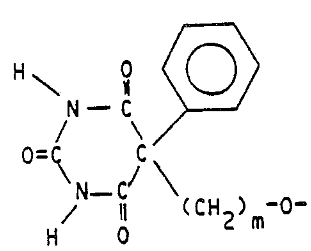

wherein m is an integer from 2 to 6, and

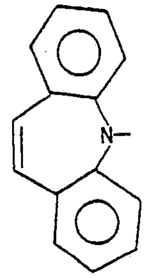

2. A compound as defined in claim 1 wherein $R_2$ is

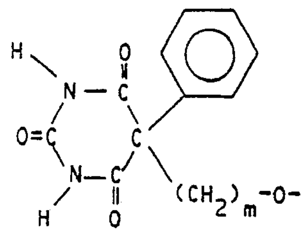

and wherein m is an integer from 2 to 6.

3. A compound as defined in claim 2 wherein n is 6, m is 2, R is butyl and $R_1$ is methyl.

4. A compound as defined in claim 1 wherein $R_2$ is

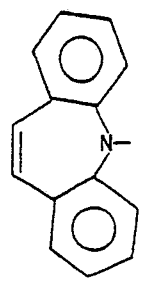

5. A compound as defined in claim 4 wherein n is 6, R is ethyl and $R_1$ is methyl.

6. A compound as defined in claim 1 wherein Z is selected from the group consisting of chloro, iodo, methyl sulfate and tetrafluoroborate ions.

7. A compound as defined in claim 3 wherein Z is the tetrafluoroborate ion.

8. A compound as defined in claim 5 wherein Z is the tetrafluoroborate ion.

**Patentansprüche**

1. Eine Verbindung der Formel:

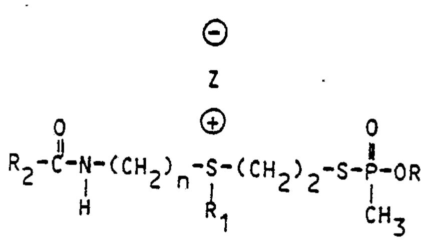

worin Z ein biologisch verträgliches Gegenion ist, n eine ganze Zahl von 2 bis 6 ist, R und $R_1$ jeweils unabhängig voneinander Alkyl mit 1 bis 5 Kohlenstoffatomen sind, und $R_2$ aus der Gruppe ausgewählt ist, die aus

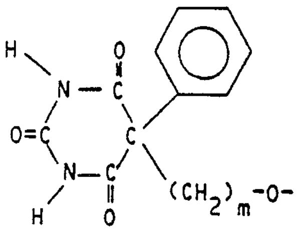

worin m eine ganze Zahl von 2 bis 6 ist, und

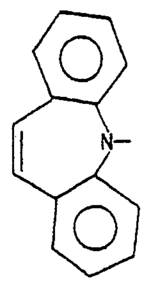

besteht.

2. Eine Verbindung wie in Anspruch 1 definiert, worin $R_2$

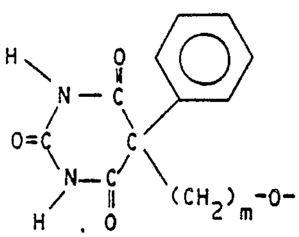

ist, und worin m eine ganze Zahl von 2 bis 6 ist.

3. Eine Verbindung wie in Anspruch 2 definiert, worin n 6 ist, m 2 ist, R Butyl ist, und $R_1$ Methyl ist.

4. Eine Verbindung wie in Anspruch 1 definiert, worin $R_2$

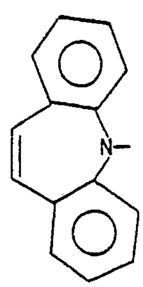

5. Eine Verbindung wie in Anspruch 4 definiert, worin n 6 ist, R Ethyl ist, und $R_1$ Methyl ist.

6. Eine Verbindung wie in Anspruch 1 definiert, worin Z aus der Gruppe ausgewählt ist, die aus Chlor-, Iod-, Methylsulfat- und Tetrafluorborationen besteht.

7. Eine Verbindung wie in Anspruch 3 definiert, worin Z das Tetrafluorboration ist.

8. Eine Verbindung wie in Anspruch 5 definiert, worin Z das Tetrafluorboration ist.

**Revendications**

1. Un composé de formule:

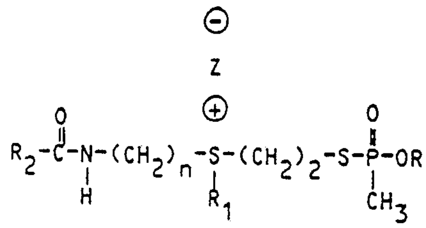

dans laquelle Z est un contre-ion biologiquement compatible, n est un entier de 2 à 6, R et $R_1$ sont chacun indépendamment un alkyle en $C_1$—$C_5$ et $R_2$ est choisi parmi

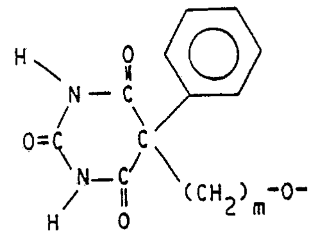

dans lequel m est un entier de 2 à 6, et

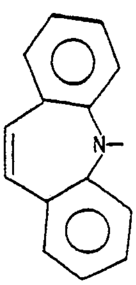

2. Un composé tel que défini à la revendication 1, dans lequel $R_2$ est

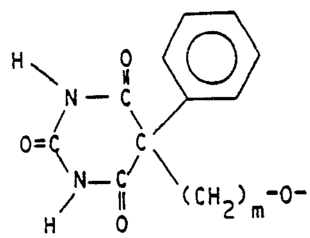

et dans lequel m est un entier de 2 à 6.

3. Un composé tel que défini à la revendication 2, dans lequel n est égal à 6, m est égal à 2, R est un butyle et $R_1$ est un méthyle.

4. Un composé tel que défini à la revendication 1, dans lequel $R_2$ est

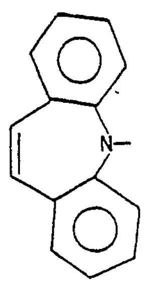

5. Un composé tel que défini à la revendication 4, dans lequel n est égal à 6, R est un éthyle et $R_1$ est un méthyle.

6. Un composé tel que défini à la revendication 1, dans lequel Z est choisi parmi les ions chloro, iodo, méthylsulfate et tétrafluoroborate.

7. Un composé tel que défini à la revendication 3, dans lequel Z est l'ion tétrafluoroborate.

8. Un composé tel que défini à la revendication 5, dans lequel Z est l'ion tétrafluoroborate.